# EUROPEAN PATENT SPECIFICATION

(11) **EP 2 745 685 B1**
(45) Date of publication and mention of the grant of the patent: **05.08.2015**
(21) Application number: 13192761.8
(22) Date of filing: 13.11.2013
(51) Int. Cl.: A01K 89/01

(54) **Spinning reel and spinning reel spool**
Angelrolle und Angelrollenspule
Bobine pour moulinet de pêche et moulinet de pêche

(30) Priority: 20.12.2012 JP 2012277878; 03.10.2013 US 201314045139
(43) Date of publication of application: 25.06.2014
(73) Proprietor: SHIMANO INC., Osaka 590-8577 (JP)
(72) Inventor: Hiraoka, Hirokazu, Osaka, Osaka 590-8577 (JP); Takamatsu, Takuji, Osaka, Osaka 590-8577 (JP); Kitajima, Keigo, Osaka, Osaka 590-8577 (JP); Koji, Ochiai, Osaka, Osaka 590-8577 (JP); Sato, Akihiko, Osaka, Osaka 590-8577 (JP)
(74) Representative: Grosse, Felix Christopher

(56) References cited:
- JP-A- 2003 259 772
- JP-A- 2010 227 007
- US-A1- 2001 054 661
- US-A1- 2002 088 889

## Description

### TECHNICAL FIELD

The present invention relates to a spinning reel that delivers fishing line forward and a spinning reel spool.

### BACKGROUND ART

The conventional spinning reel is comprised of a spool body, an abutting member, and a ring member. In this type of spinning reel, the ring member is held between the abutting member and the spool body. Specifically, the ring member is held between the abutting member and the spool body by mounting the abutting member to the spool body in a state of having disposed the ring member on the front side of the spool body.

An according conventional spinning reel is for instance disclosed in Japanese Laid-open Patent Publication No. 2008-283931. A spinning reel is also disclosed in US 2002/088889 A1.

### OBJECT OF THE INVENTION

In the conventional configuration, the ring member is held between the abutting member and the spool body. In this configuration, a space (a closed space) surrounded by the spool body, the abutting member (a spool collar), and the ring member (a spool ring) is formed in the outer circumferential portion at the front portion of the spool. Therefore, once a foreign substance such as seawater or the like infiltrates this closed space, there is a concern that the spool body may corrode from the effect of the foreign substance. Namely, there is a concern that the durability of the spool body may degrade.

Also, the abutting member makes contact with the ring member while pressing the ring member. Therefore, if the abutting member is formed from a resin or the like to achieve reduction in the weight of the spool, there is a concern, depending on the material that was selected, that the abutting member may be deformed or broken by the stress generated in the abutting member.

The present invention was made with consideration given to the problems described above, and the object of the present invention is to enhance the durability of the spool.

### MEANS OF ACHIEVING THE OBJECT

The spinning reel spool according to claim 1 is a spinning reel spool delivering fishing line forward. This spinning reel spool is comprised of a spool body and a ring member for guiding fishing line forward. This spool body has a body portion and a protruding portion integrally formed on a front side of the body portion. The protruding portion protrudes from the body portion in the axial direction of the spool body. The protruding portion comprises a plastically deformable part. The ring member is disposed on an outer circumferential surface of the protruding portion. The ring member is held between the body portion and the plastically deformable part of the protruding portion by deforming the plastically deformable part. Preferably, the plastically deformable part is deformed by applying a pressing force.

In this spool, the ring member is held between the plastically deformable part of the protruding portion and the body portion by plastically deforming at least one portion of the protruding portion of the spool body according to a pressing force. Therefore, in this configuration, the spool collar (the abutting member) is made unnecessary. Namely, in this case, a closed space is not formed. Therefore, corrosion of the spool body can be prevented. Namely, the durability of the spool can be enhanced in the present invention.

On the other hand, if the spool collar (the abutting member) is not used as a member for fixing the ring member to the spool body and is used simply as a lid member for covering the front portion of the spool body, putting the spool collar in contact with the ring member is not necessary. Therefore, the space surrounded by the spool collar, the ring member, and the spool body does not form a closed space. As a result, foreign substance such as seawater or the like is not likely to be retained in this space (≠closed space) and corrosion of the spool body can be suppressed. Namely, the durability of the spool can be enhanced in the present invention.

Also, in the case when the spool collar is used as a lid member, the spool collar does not need to press the ring member. Therefore, a reactive force is not received from the ring member. As a result, even if the spool collar is formed from a resin or the like, it is possible to prevent the deformation or breaking of the spool collar caused by stress. Namely, the durability of the spool can be enhanced in the present invention.

Preferably, one of the ring member and the spool body has a concave portion. The other one of the ring member and the spool body has an engaging portion that engages the concave portion to limit rotation of the ring member relative to the spool body. By engaging the engaging portion with the concave portion, the rotation of the ring member in relation to the spool body is thus regulated.

In this case, the engaging portion of either the ring member or the spool body engages with the concave portion of the other one of the ring member or the spool body. Accordingly, the rotation of the ring member in relation to the spool body is regulated. Namely, by engaging the engaging portion with the concave portion, the rotation of the ring member in relation to the spool body can be easily regulated.

Preferably, the ring member includes an inner circumferential portion having the concave portion. The engaging portion is a part of the plastically deformable part of the protruding portion to limit rotation of the ring member relative to the spool body.

In this case, the plastically deformable part of the spool body is engaged with the concave portion of the ring member. Accordingly, rotation of the ring member in relation to the spool body is regulated. Namely, the rotation of the ring member in relation to the spool body can be regulated when the spool body is plastically deformed.

Preferably, the inner circumferential portion is a ring member protruding portion, wherein the thickness of the ring member protruding portion in the axial direction is less than the protruding height of the protruding portion of the spool body in the axial direction.

Preferably, the spool body includes the concave portion. The ring member has a projection that engages the concave portion.

In this case, the projection of the ring member engages with the concave portion of the spool body. Accordingly, the rotation of the ring member in relation to the spool body is regulated. Namely, by disposing the projection of the ring member in the concave portion of the spool body and plastically deforming the spool body, the rotation of the ring member in relation to the spool body can be regulated. Preferably, the projection of the ring member is a convex portion.

Preferably, the outer circumferential portion of the protruding portion has a groove that is located at a position forwardly spaced from the body portion by a prescribed amount.

In this case, a groove portion is formed on the outer circumferential portion of the protruding portion. Specifically, this groove portion is formed on the outer circumferential portion of the protruding portion at a position forwardly spaced apart from the body portion by a prescribed amount. By forming a groove portion to the outer circumferential portion of the protruding portion as described above, the protruding portion, especially the plastically deformable part thereof, can easily be plastically deformed on the outer circumferential side with this groove portion as the reference point.

Preferably, the protruding portion has an inner circumferential surface that is obtusely angled with respect to a front surface of the body portion that extends radially inward toward a center axis of the spinning reel spool.

In this case, the angle formed from the inner circumferential portion of the protruding portion and the front surface of the body portion is an obtuse angle. In other words, the thickness in the radial direction at the extreme end portion of the protruding portion is thinner than the thickness in the radial direction at the base end portion of the protruding portion. Accordingly, the extreme end portion of the protruding portion can easily be plastically deformed.

Preferably, the body portion has a first section extending radially inward toward a center axis of the spinning reel spool from the protruding portion. The body portion has a second section extending radially outwardly away from the center axis of the spinning reel spool from the protruding portion. The first section has a first thickness as measured in the axial direction and the second section has a second thickness as measured in the axial direction, wherein the first thickness is greater than the second thickness.

In this case, the thickness in the section on the radially inward side of the body portion, i.e. the first section, is thicker than the thickness at the section on the radially outward side of the body portion, i.e. the second section, with the protruding portion as reference. Accordingly, deformation, for example, out-of-plane deformation, of the section on the radially inward side of the body portion can be prevented when a pressing force is applied to the annular portion.

Preferably, the ring member is fixed to the spool body by the plastically deformable part, which is only partially disposed along the protruding portion.

In this case, the ring member can easily be fixed to the spool body just by deforming at least one portion of the protruding portion.

Preferably, the protruding portion is an annular member extending around a center axis of the spinning reel spool.

Preferably, the protruding portion includes two curved sections that are annularly arranged around a center axis of the spinning reel spool and each of the two curved sections includes the plastically deformable part.

The spinning reel according to claim 12 has a reel body, a handle and a rotor. The handle is rotatably mounted to the reel body. The rotor is operatively coupled between the handle and the spinning reel spool to wind fishing line on the spinning reel spool.

In this spinning reel, the spinning reel spool is the spool according to any one of the claims 1 to 11. Accordingly, a spinning reel capable of enhancing the durability of the spinning reel spool can be provided.

### EFFECT OF THE INVENTION

According to the present invention, the durability of the spool can be enhanced.

### BRIEF DESCRIPTION OF THE DRAWINGS

[FIG. 1] is a side view of a spinning reel according to a first embodiment of the present invention.
[FIG. 2] is a cross-sectional side view of the spinning reel of Fig. 1.
[FIG. 3] is a partially enlarged view of a spinning reel spool.
[FIG. 4] is a front view of a ring member.
[FIG. 5] is a front perspective view showing a state wherein a ring member is disposed to the front flange.
[FIG. 6] is a side view of a spinning reel according to a second embodiment of the present invention.
[FIG. 7] is a front perspective view showing a state wherein the ring member is fixed to a front flange of a spinning reel spool of the spinning reel (a deformed state).
[FIG. 8A] is a partial cross-sectional view showing a state wherein the ring member is disposed to the front flange (a non-deformed state).
[FIG. 8B] is a partial cross-sectional view showing a state wherein the ring member is disposed to the front flange (a deformed state).
[FIG. 9] is a partial cross-sectional view of the rotation regulating portion in a state wherein the ring member is disposed to the front flange (a deformed state).
[FIG. 10] is partially enlarged perspective view of a spinning reel spool according to another embodiment of the present invention.

### DETAILED DESCRIPTION OF THE DRAWINGS

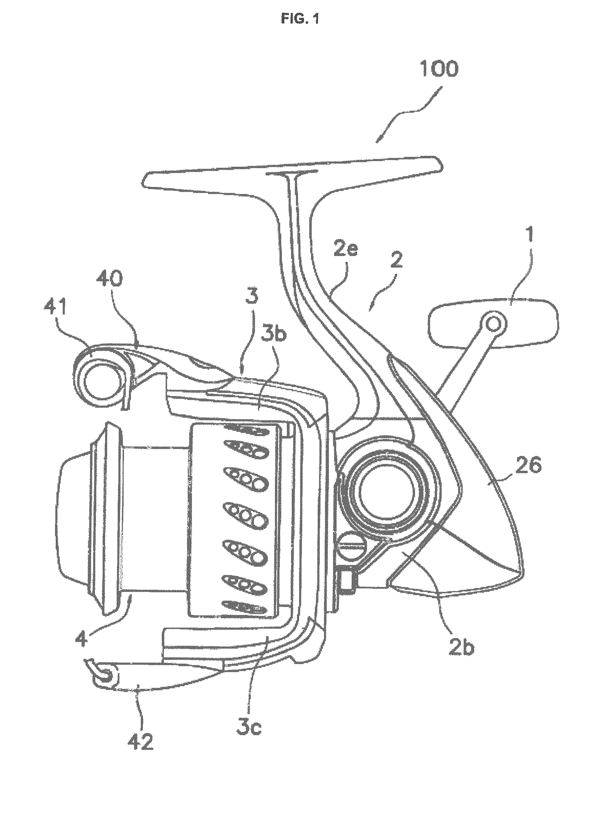

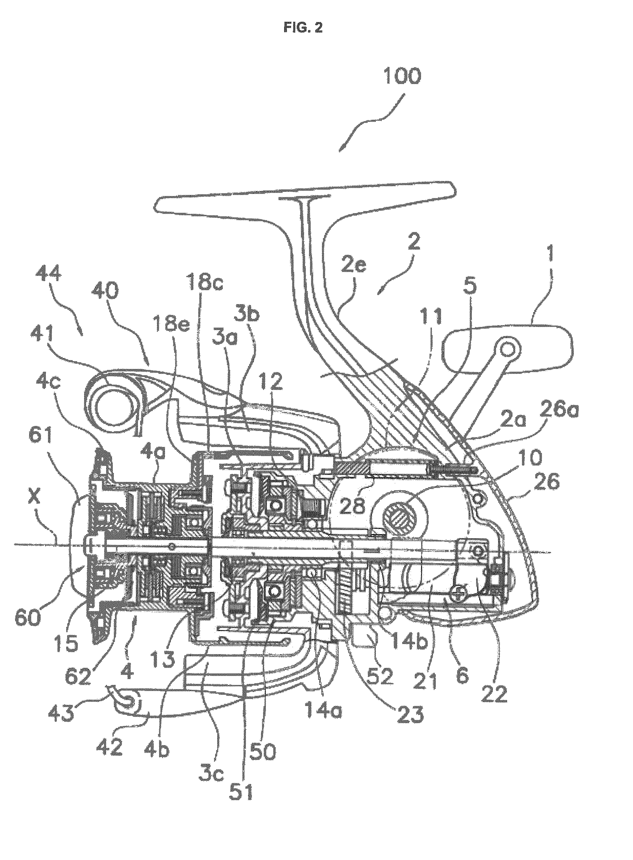

As illustrated in FIG. 1, the spinning reel 100 according to the first embodiment of the present invention is a reel capable of delivering fishing line forward. As illustrated in FIGS. 1 and 2, the spinning reel 100 is comprised of a handle 1, a reel body 2 that rotatably supports the handle 1, a rotor 3, and a spool 4.

The handle 1 is rotatably mounted to the reel body 2. The handle 1 can be mounted on either the right side or the left side of the reel body 2.

The reel body 2 is comprised of a housing portion 2a (cf. FIG. 2) wherein the side portion is opened, a lid member 2b that covers the side portion of the housing portion 2a, and a guard member 26 mounted to the rear portion of the housing portion 2a.

A T-shaped fishing rod mounting portion 2e that extends in the longitudinal direction is integrally formed on the top portion of the housing portion 2a. As illustrated in FIG. 2, a rotor drive mechanism 5 and an oscillating mechanism 6 are installed inside of the housing portion 2a. The front portion of the housing portion 2a is open. The lid member 2b is detachably mounted to the housing portion 2a to cover the opening at the side portion of the housing portion 2a. The lid member 2b is fixed to the housing portion 2a with, for example, a fastening bolt not illustrated in the drawing.

The guard member 26 is a member that is mounted from the rear to cover the housing portion 2a and the lid member 2b. The guard member 26 is fixed to the housing portion 2a, for example, via a boss portion 26a. The guard member 26 determines the external shape of the rear portion of the reel body 2. For appearance, the guard member 26 is mounted to the housing portion 2a that includes a fishing rod mounting portion 2e and the lid member 2b via the packing not illustrated in the drawing.

The rotor 3 is rotatably supported at the front portion of the reel body 2. Specifically, the rotor 3 is integrally and rotatably coupled to the pinion gear 12 to be described later. The rotor 3 can be switched between a rotation prohibit state and a rotation allow state according to an anti-reverse mechanism 50. The anti-reverse mechanism 50 is, for example, a roller-type one-way clutch 51. This switching operation is carried out according to a switch lever 52 disposed at the bottom portion of the reel body 2.

The rotor 3 is comprised of a cylindrical portion 3a, a first rotor arm 3b, and a second rotor arm 3c. The cylindrical portion 3a, the first rotor arm 3b, and the second rotor arm 3c are integrally formed. The first rotor arm 3b and the second rotor arm 3c are disposed at the sides of the cylindrical portion 3a to oppose each other.

A first bail support member 45 is pivotally mounted on the outer circumferential side at the extreme end of the first rotor arm 3b. A line roller 46 for guiding fishing line to the spool 4 is mounted at the extreme end of the first bail support member 45. Also, a second bail support member 42 is pivotally mounted on the inner circumferential side at the extreme end of the second rotor arm 3c.

A bail 43 in a form wherein a wire was curved roughly into a U-shape is fixed between a line roller 46 and the second bail support member 42. A bail arm 44 that guides fishing line to the spool 4 is configured according to the first bail support member 45, the second bail support member 42, the line roller 46, and bail 43. The bail arm 44 can pivot between a fishing line guide position and the reversal thereof of a fishing line release position as illustrated in FIG. 2.

The spool 4 is for winding fishing line on the outer circumferential surface and is disposed at the front portion of the rotor 3 to move in the longitudinal direction. The spool 4 is integrally formed. The spool 4 is disposed between the first rotor arm 3b and the second rotor arm 3c of the rotor 3. The spool 4 is mounted to the extreme end of the spool shaft 15 via a drag mechanism 60. Reference symbol X in FIG. 2 indicates the shaft center of the spool shaft 15.

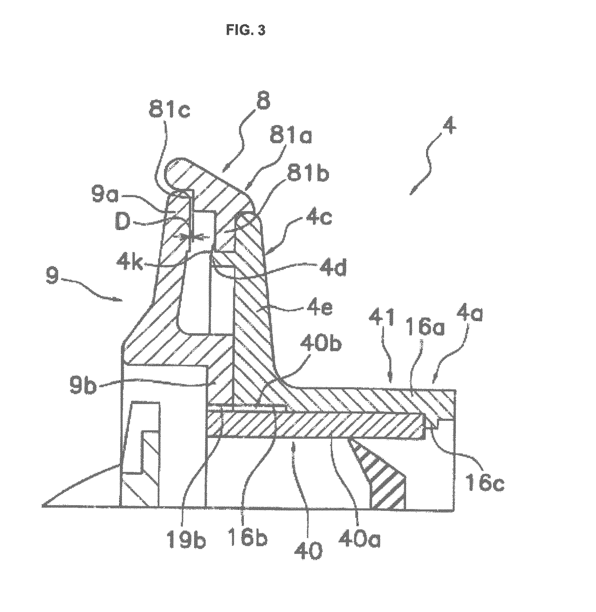

As illustrated in FIG. 3, the spool 4 is comprised of a coupling portion 40, a spool body 41, a ring member 8, and a fastening member 9.

The coupling portion 40 is a member for coupling the spool body 41 and the fastening member 9. The coupling portion 40 is comprised of a cylindrical body portion 40a and a male threaded portion 40b. The male threaded portion 40b is formed on the outer circumference at one end of the body portion 40a. Specifically, the male threaded portion 40b is formed on the outer circumference of the body portion 40a from the front end portion to the center portion of the body portion 40a.

The spool body 41 is comprised of a fishing line winding drum portion 4a, a skirt portion 4b (cf. FIG. 2), a front flange portion 4c, and an annular protrusion 4d (one example of the protruding portion). Fishing line is wound on the outer circumferential surface of the fishing line winding drum portion 4a. Here, the body portion of the spool body 41 is comprised of a fishing line winding drum portion 4a, a skirt portion 4b (cf. FIG. 2), and a front flange portion 4c.

The fishing line winding drum portion 4a is disposed on the outer circumference of the coupling portion 40 while being screwed to the male threaded portion 40b of the coupling portion 40. The fishing line winding drum portion 4a is comprised of a cylindrical portion 16a, a first female threaded portion 16b, and a positioning portion 16c. The cylindrical portion 16a is formed into a cylindrical shape. The first female threaded portion 16b is formed at the front end portion of the fishing line winding drum portion 4a on the inner circumference of the fishing line winding drum portion 4a. More specifically, the first female threaded portion 16b is formed on the inner circumference side at the front end portion of the cylindrical portion 16a. The first female threaded portion 16b is screwed to the center portion of the male threaded portion 40b of the coupling portion 40. The positioning portion 16c is for positioning the coupling portion 40. The positioning portion 16c is integrally formed while protruding inward from the inner circumferential portion of the cylindrical portion 16a. The rear end portion of the coupling portion 40 can make contact with the positioning portion 16c.

As illustrated in FIG. 2, the skirt portion 4b is integrally formed on the fishing line winding drum portion 4a to cover the cylindrical portion 3a of the rotor 3. Specifically, the skirt portion 4b is integrally formed on the fishing line winding drum portion 4a at the rear of the fishing line winding drum portion 4a. This skirt portion 4b is formed into a cylindrical shape. The skirt portion 4b is comprised of a rear flange portion 18e and a cylindrical portion 18c that protrudes rearward from the extreme end portion of the rear flange portion 18e. The rear flange portion 18e protrudes radially outward from the rear end portion of the fishing line winding drum portion 4a to be substantially the same length as the radial length of the front flange portion 4c.

As illustrated in FIGS. 2 and 3, the front flange portion 4c extends radially outward from the front portion of the fishing line winding drum portion 4a. In other words, the front flange portion 4c is formed to have a larger diameter than that of the fishing line winding drum portion 4a and is disposed at the front end of the fishing line winding drum portion 4a.

The front flange portion 4c has a body portion 4e and an annular protrusion 4d. The body portion 4e protrudes radially outward from the front end portion of the fishing line winding drum portion 4a. The body portion 4e is integrally formed on the fishing line winding drum portion 4a and is smoothly coupled to the front end portion of the fishing line winding drum portion 4a.

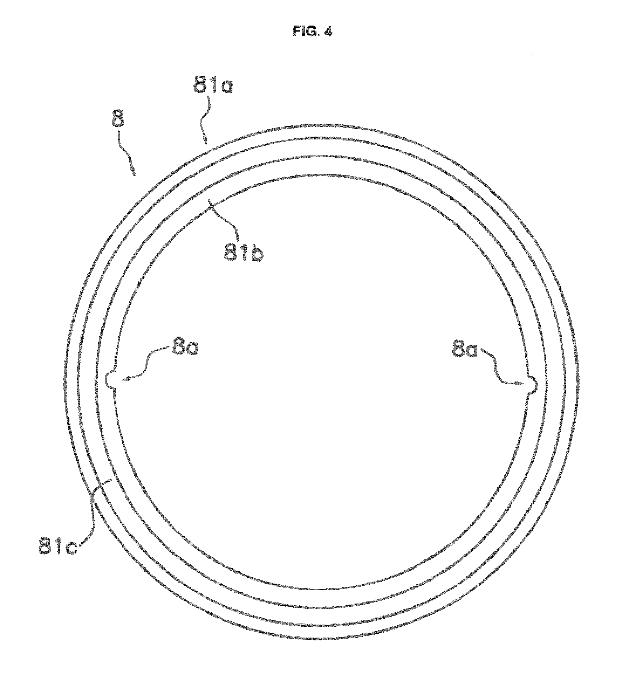

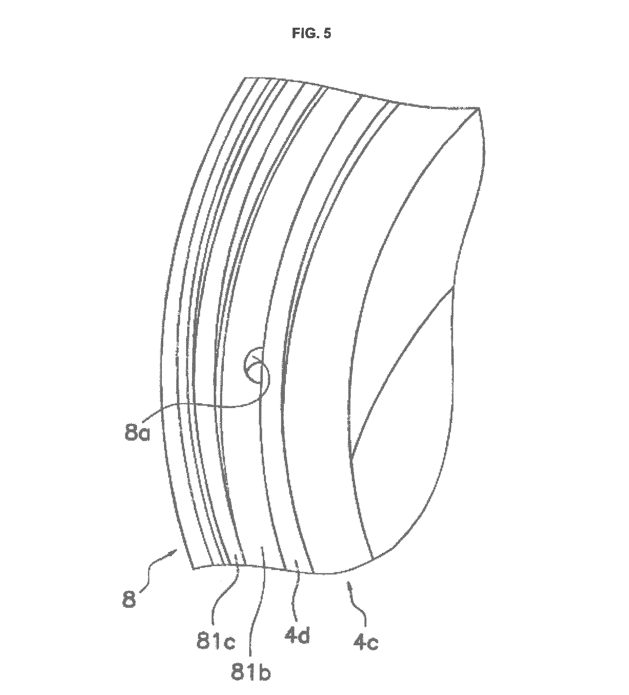

The annular protrusion 4d is integrally formed on the front side of the body portion 4e of the front flange portion 4c. Specifically, the annular protrusion 4d protrudes forward from the body portion 4e of the front flange portion 4c. The annular protrusion 4d is plastically deformable. Specifically, at least one portion of the annular protrusion 4d is plastically deformed according to a pressing force. More specifically, at least one portion of the annular protrusion 4d is deformed according to a pressing force. Hereafter, the section (the plastically deformable part) where the annular protrusion 4d was deformed will be referred to as the deformed portion 4k (one example of the plastically deformable part, one example of the engaging portion). The deformed part 4k engages with the concave portion 8a (cf. FIGS. 4 and 5 to be described later) of the ring member 8. The ring member 8 is disposed on the outer circumferential portion of the annular protrusion 4d.

The ring member 8 is for guiding fishing line forward. The ring member 8 is disposed on the outer circumferential portion of the front flange portion 4c. Specifically, the ring member 8 is held between the deformed portion 4k of the annular protrusion 4d and the front flange portion 4c (the body portion 4e) by deforming the annular protrusion 4d (the section that is not adjacent to the concave portion 8a) in a state of having disposed the ring member 8 on the outer circumferential portion of the annular protrusion 4d. The ring member 8 is held by the section of the deformed part 4k that is not engaging the concave portion 8a. Accordingly, the ring member 8 is fixed to the front flange portion 4c (the spool body 41).

Here, the configuration of the ring member 8 will be described in detail. As illustrated in FIGS. 3 through 5, the ring member 8 is comprised of a body portion 81a, a protruding portion 81b, and a step portion 81c. The body portion 81a is formed into an annular shape. The protruding portion 81b is integrally formed on the inner circumferential side of the body portion 81a. The protruding portion 81b is formed into an annular shape. Specifically, the protruding portion 81b is formed such that the thickness of the protruding portion 81 b (the thickness in the axial direction, the thickness in the direction that follows the spool shaft 15) is made to be less than the protruding height of the annular protrusion 4d before the plastic deformation. An annular protrusion 4d of the front flange portion 4c is formed at the extreme end portion of the protruding portion 81 b, and the annular protrusion 4d of the front flange portion 4c is engaged. Specifically, the extreme end portion of the protruding portion 81b is held between the body portion 4e of the front flange portion 4c and the deformed part 4k of the annular portion 4d of the front flange portion 4c.

The protruding portion 81 b has a concave portion 8a. The concave portion 8a is formed on the inner circumferential portion (the extreme end portion) of the protruding portion 81 b. Specifically, two concave portions 8a are formed on the inner circumferential portion of the protruding portion 81 b. The two concave portions 8a are formed on the inner circumferential portion of the protruding portion 81b to oppose each other. The deformed part 4k of the annular protrusion 4d engages with the concave portion 8a when the annular protrusion 4d (the section that is adjacent to the concave portion 8a) is deformed in a state wherein the protruding portion 81b has been disposed to the outer circumferential portion of the annular protrusion 4d. Accordingly, the rotation of the ring member 8 in relation to the spool body 41 is regulated. Also, an effect of fixing the ring member 8 to the front flange portion 4c (the spool body 41) can be expected when the deformed part 4k of the annular protrusion 4d is engaged with the concave portions 8a. Here, an example was shown of a case wherein two concave portions 8a are formed. However, all that is necessary is to have more than one concave portion 8a.

The step portion 81 c is formed on the outer circumferential portion of the body portion 81a. The outer circumferential portion (the outer circumferential portion of the tilted portion 9a to be described later) of the fastening member 9 is disposed to the step portion 81c. More specifically, the outer circumferential portion of the fastening member 9 is disposed to the step portion 81c to form a space D (cf. FIG. 3) between the step portion 81c and the outer circumferential portion (the outer circumferential portion of the tilted portion 9a to be described later) of the fastening member 9.

Here, an example in which a space D is formed between the step portion 81c and the outer circumferential portion of the fastening member 9 was described. However, forming this space D is not always necessary if the force with which the outer circumferential portion of the fastening member 9 presses the step portion 81c is small. In a case wherein the space D is not formed, the ring member 8 and/or the fastening member 9 is formed such that the outer circumferential portion of the fastening member 9 is not deformed by the force pressing the step portion 81c.

The fastening member 9 is disposed on the front side of the fishing line winding drum portion 4a. Also, the fastening member 9 is disposed on the front side of the front flange portion 4c. The fastening member 9 makes contact with the front side of the fishing line winding drum portion 4a on the outer circumference of the coupling portion 40 while being screwed to the male threaded potion 40b of the coupling portion 40. The fastening member 9 is comprised of an abutting portion 9b and a tilted portion 9a. The abutting portion 9b is the section that makes contact with the fishing line winding drum portion 4a. The abutting portion 9b is formed into a cylindrical shape.

The abutting portion 9b has a second female threaded portion 19b. The second female threaded portion 19b is formed on the inner circumferential surface of the abutting portion 9b. The second female threaded portion 19b is screwed to the front end side of the male threaded portion 40b of the coupling portion 40. Accordingly, the abutting portion 9b makes contact with the front side of the fishing line winding drum portion 4a on the outer circumference of the coupling portion 40. More specifically, the abutting portion 9b makes contact with the front side of the front flange portion 4c on the outer circumference of the coupling portion 40. When the second female threaded portion 19b is mounted to the male threaded portion 40b of the coupling portion 40 as was described above, the first female threaded portion 16b and the second female threaded portion 19b are screwed to the male threaded portion 40b in a state wherein the first female threaded portion 16b and the second female threaded portion 19b are connected.

The tilted portion 9a is integrally formed on the outer circumferential portion of the abutting portion 9b. Specifically, the tilted portion 9a is formed to protrude radially outward from the abutting portion 9b to increase in diameter from the front side to the rear side. The outer circumferential portion of the tilted portion 9a is disposed on the front side of the ring member 8. Here, a space D is formed between the outer circumferential portion of the tilted portion 9a and the front side of the ring member 8. The rear end portion of the drag control knob 61 to be described later is housed in the inner circumferential portion of the fastening member 9.

As illustrated in FIG. 2, the drag mechanism 60 is a mechanism for braking the rotation of the spool 4 and is comprised of a drag control knob 61 that is screwed to the extreme end of the spool shaft 15 and a brake portion 62 that is pressed by the drag control knob 61 and applies a braking force to the spool 4.

The rotor drive mechanism 5 drives the rotor 3. The rotor drive mechanism 5 is comprised of a drive shaft 10, a drive gear 11, and a pinion gear 12. The drive shaft 10 is rotatably supported to the reel body 2 according to a bearing not illustrated in the drawings. A handle 1 is fixed to the drive shaft 10. The drive gear 11 is provided to be integral to the drive shaft 10 or to be a separate member from the drive shaft 10. Here, the drive gear 11 is in the form of a face gear. The pinion gear 12 is a member that interlocks with the drive gear 11. The pinion gear 12 is formed into a cylindrical shape, and the front portion of the pinion gear 12 penetrates the center portion of the rotor 3 and is fixed to the rotor 3 via a nut 13. Also, the middle portion and the rear end portion in the axial direction of the pinion gear 12 are rotatably supported by the reel body 2 via the respective bearings 14a and 14b.

The oscillating mechanism 6 drives the spool 4. The oscillating mechanism 6 is a mechanism for moving the spool shaft 15 coupled to the center portion of the spool 4 in the longitudinal direction via the drag mechanisms 60 while moving the spool 4 in the same direction. The oscillating mechanism 6 is comprised of a traverse camshaft 21, a slider 22, and a middle gear 23. The traverse camshaft 21 is arranged below the spool shaft 15 to be parallel to the spool shaft 15. The slider 22 moves in the longitudinal direction along the traverse camshaft 21. The rear end of the spool shaft 15 is non-rotatably fixed to the slider 22. The middle gear 23 is fixed to the extreme end of the traverse camshaft 21. The middle gear 23 interlocks with the pinion gear 12.

Here, the procedure for assembling the front portion of the spool 4 will be described. First, the ring member 8 is disposed on the front side of the front flange portion 4c of the spool body 41. Specifically, the ring member 8 is disposed on the outer circumferential portion of the annular protrusion 4d on the front side of the front flange portion 4c of the spool body 41.

Next, a pressing force is applied to the annular protrusion 4d in the state described above, and the annular protrusion 4d is deformed whereupon the ring member 8 is held between the deformed part 4k of the annular protrusion 4d and the front flange portion 4c. Specifically, the deformed part 4k that does not engage with the concave portion 8a of the ring member 8 is used to fix the ring member 8 to the spool body 41 (the front flange portion 4c). On the other hand, the deformed part 4k that engages with the concave portion 8a of the ring member 8 is used primarily for regulating the rotation of the ring member 8 in relation to the spool body 41. Also, the deformed part 4k that engages with the concave portion 8a of the ring member 8 is used to fix the ring member 8 to the spool body 41 (the front flange portion 4c).

(1) The spool 4 of the spinning reel 100 in the first embodiment is a reel that delivers fishing line in the forward direction. This spool 4 is comprised of a spool body 41 and a ring member 8. The spool body 41 is comprised of a body portion (the fishing line winding drum portion 4a, the skirt portion 4b, and the front flange portion 4c) and an annular protrusion 4d. The annular protrusion 4d is integrally formed on the front side of the body portion 4a, 4b, and 4c, for example, on the front side of the front flange portion 4c. The annular protrusion 4d is plastically deformable. The ring member 8 is disposed on the outer circumferential portion of the annular protrusion 4d. The ring member 8 is held between the deformed part 4k (the plastically deformed portion) of the annular protrusion 4d and the front flange portion 4c by plastically deforming at least one portion of the annular protrusion 4d according to a pressing force.

In the spool 4 of the first embodiment, the fastening member 9 is not used as a member for fastening the ring member 8 to the spool body 41 and is used as a lid member that covers the front portion of the spool body 41. Therefore, the fastening member 9 does not need to make contact with the ring member 8. Namely, the space surrounded by the fastening member 9, the ring member 8, and the spool body 41 does not form a closed space. As a result, a foreign substance such as seawater or the like is not likely to be retained in this space (≠closed space), and corrosion of the spool body 41 can be suppressed. Namely, in this spool 4, the durability of the spool 4 can be enhanced.

Also, in the case when the fastening member 9 is used as a lid member, the fastening member 9 does not need to press the ring member 8. Therefore, a reactive force is not received from the ring member 8. As a result, even if the fastening member 9 is formed with a resin or the like, it is possible to prevent the deformation or breaking of the fastening member 9. Namely, in this spool 4, the durability of the spool can be enhanced.

(2) In the spool 4 of the spinning reel 100 in the first embodiment, the ring member 8 has a concave portion 8a. The concave portion 8a is formed on the inner circumferential portion of the ring member 8. The spool body 41 has a deformed part 4k that engages with the concave portion 8a. By engaging the deformed part 4k with the concave portion 8a, the rotation of the ring member 8 in relation to the spool body 41 is regulated. In this case, the deformed part 4k of the spool body 41 engages with the concave portion 8a of the ring member 8. Accordingly, the rotation of the ring member 8 in relation to the spool body 41 is regulated. Namely, the rotation of the ring member 8 and the fixation of the ring member 8 in relation to the spool body 41 can be realized concurrently just by engaging the deformed part 4k with the concave portion 8a.

(3) The spinning reel 100 in the first embodiment is comprised of a reel body, a handle, a rotor, and a spool 4. The handle is rotatably mounted to the reel body. The rotor rotates by interlocking with the operation of the handle. Fishing line is wound on the spool 4 according to the rotation of the rotor. The spool 4 is the spool 4 in the first embodiment.

In the spinning reel 100 of the first embodiment, the spool 4 is the spool in the first embodiment. Accordingly, the spinning reel 100 in the present invention can enhance the durability of the spool 4.

The spinning reel 200 according to the second embodiment in the present invention is a reel that can deliver fishing line in the forward direction. The spinning reel 200 according to the second embodiment has the same configuration as that of the spinning reel 100 described in the first embodiment except for the configuration of the spool 104. Therefore, the description of the configuration that is the same as that of the spinning reel 100 in the first embodiment will be omitted. Only the configuration that varies from the spinning reel 100 in the first embodiment will be described. Refer to the description in the first embodiment for sections where the description has been omitted.

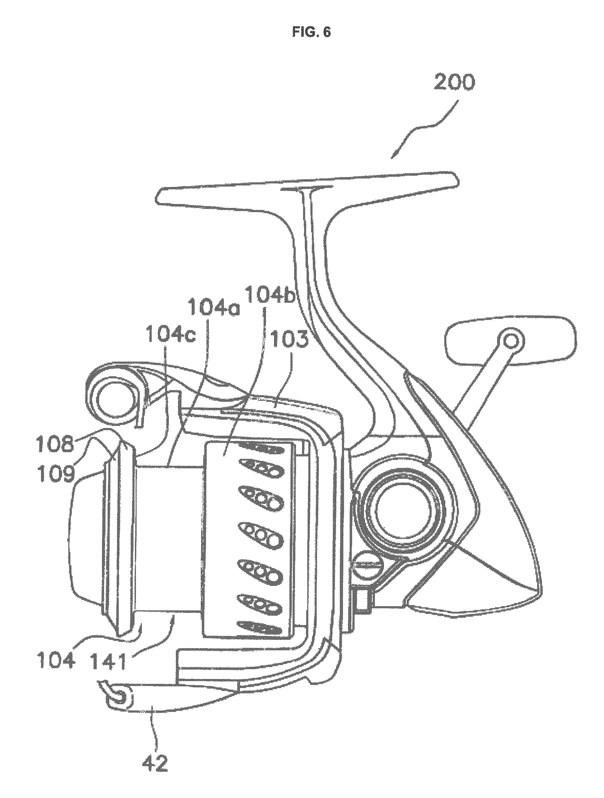

As illustrated in FIG. 6, the spool 104 is for winding fishing line on the outer circumferential surface and is disposed to the front portion of the rotor 103 to move in the longitudinal direction. The spool 104 is comprised of a spool body 141, a ring member 108, a fastening member 109, and a coupling portion 40 (cf. FIG. 3) that couples the spool body 141 and the fastening member 109.

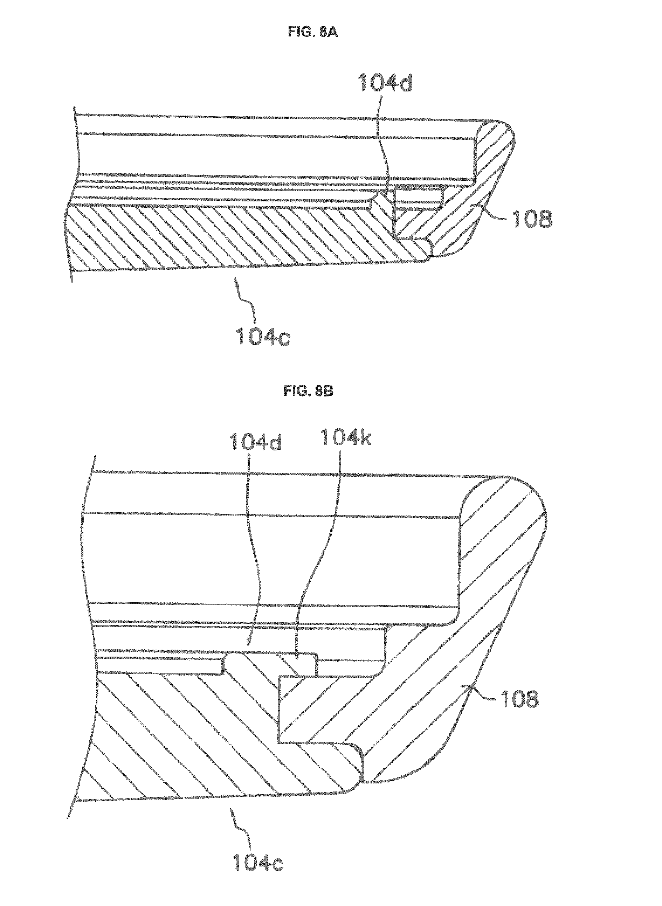

The spool body 141 is comprised of a fishing line winding drum portion 104a, a skirt portion 104b, a front flange portion 104c, and an annular protrusion 104d, being an example of a protruding portion (cf. FIGS. 8A and 8B). Here, the body portion of the spool body 141 is configured from a fishing line winding drum portion 104a, a skirt portion 104b, and a front flange portion 104c.

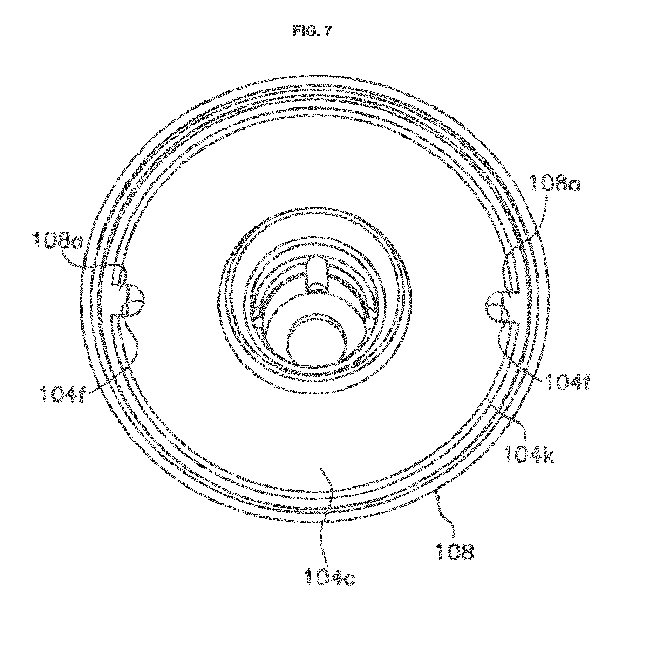

As illustrated in FIGS. 7, 8A, and 8B, the front flange portion 104c extends radially outward from the front end portion of the fishing line winding drum portion 104a. The front flange portion 104c is integrally formed on the fishing line winding drum portion 104a. The front flange portion 104c is comprised of an annular protrusion 104d (cf. FIGS. 8A and 8B) and a concave portion 104f (cf. FIG. 7). FIG. 7 is a view after deforming the annular protrusion 104d (a view after the plastic deformation).

As illustrated in FIGS. 8A and 8B, the annular protrusion 104d is integrally formed on the front side of the front flange portion 104c. Specifically, the annular protrusion 104d protrudes forward from the front flange portion 104c. The annular protrusion 104d is not formed in the section formed with the concave portion 104f. In other words, the annular protrusion 104d is a non-continuous ring that is made of two curved sections that are annularly arranged around the center axis of the spinning reel spool 104. The annular protrusion 104d is plastically deformable. Specifically, at least one portion of the annular protrusion 104d is plastically deformed according to a pressing force. More specifically, all sections (the sections not formed with the concave portion 104f) of the annular protrusion 104d are deformed according to a pressing force as illustrated in FIG. 7. Hereafter, all the deformed sections of the annular protrusion 104d (the plastically deformable parts or sections) will be referred to as the deformed part 104k (one example of the plastically deformable part, one example of the engaging portion). Each of the two curved sections of the annular protrusion 104d includes the plastically deformed part 104k as curved arcs. A ring member 108 is disposed on the outer circumferential portion of the annular protrusion 104d.

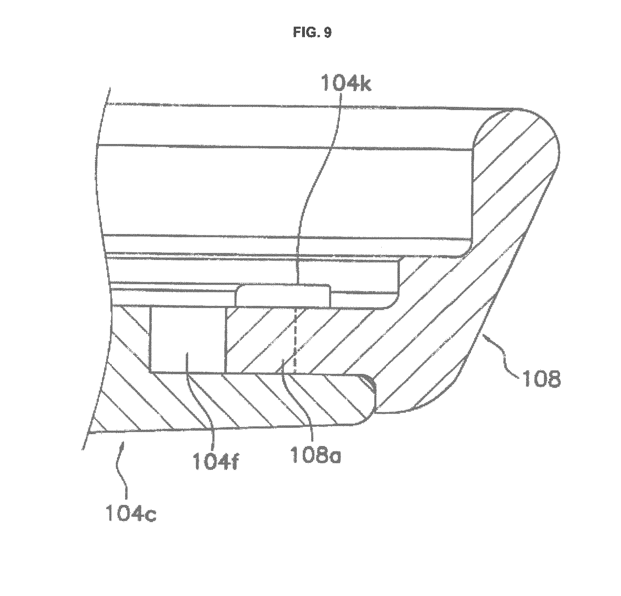

As illustrated in FIGS. 7 and 9, the concave portion 104f is formed on the outer circumferential portion of the front flange portion 104c. Specifically, two concave portions 104f are formed on the outer circumferential portion of the front flange portion 104c. The two concave portions 104f are formed on the outer circumferential portion of the front flange portion 104c to oppose each other. The two concave portions 104f are respectively engaged with the convex portion 108a (to be described later) of the ring member 108. Specifically, the convex portion 108a of the ring member 108 is interfit with the concave portion 104f. Accordingly, positioning the ring member 108 in relation to the spool body 141 is carried out, and the rotation of the ring member 108 in relation to the spool body 141 is regulated. Here, an example of a case of forming two concave portions 104f was shown. However, all that is necessary is to have more than one concave portion 8a.

The ring member 108 is for guiding fishing line in the forward direction. The ring member 108 is disposed and fixed to the outer circumferential portion of the front flange portion 104c. As illustrated in FIGS. 7 and 9, the ring member 108 has a convex portion 108a that engages with the concave portion 104f of the front flange portion 104c. The convex portion 108a is formed on the inner circumferential portion of the ring member 108. Specifically, two convex portions 108a are formed on the inner circumferential portion of the ring member 108. The two convex portions 108a are formed on the inner circumferential portion of the ring member 108 to oppose each other. The two convex portions 108a are interfit with the concave portions 104f of the front flange portion 104c. Accordingly, positioning the ring member 108 in relation to the spool body 141 is carried out. Namely, the rotation of the ring member 108 in relation to the spool body 141 is regulated. By continuously deforming the annular protrusion 104d in the circumferential direction in this state, the ring member 108 is held between the deformed part 104k of the annular protrusion 104d and the front flange portion 104c as illustrated in FIG. 7. Accordingly, the ring member 108 is fixed to the front flange portion 104c (the spool body 141).

Here, the procedure for assembling the front portion of the spool 104 will be described. First, the ring member 108 is disposed on the front side of the front flange portion 104c of the spool body 141. Specifically, the ring member 108 is disposed to the front side of the front flange portion 104c on the outer circumferential portion of the annular protrusion 104d by interfitting the two convex portions 108a of the ring member 108 respectively with the concave portions 104f of the front flange portion 104c. Accordingly, the ring member 108 is positioned in the spool body 141 (the front flange portion 104c).

Next, in this state, a pressing force is applied to the annular protrusion 104d of the front flange portion 104c, and the annular protrusion 104d is deformed. Specifically, a pressing force is applied continuously to the annular protrusion 104d of the front flange portion 104c, and the entire annular protrusion 104d is deformed. Accordingly, the ring member 108 is held between the deformed part 104k of the annular protrusion 104d of the front flange portion 104c and the front flange portion 104c. Therefore, the ring member 108 is fixed to the spool body 141 (the front flange portion 104c), and the rotation is regulated.

(1) The spool 104 in the second embodiment is comprised of a spool body 141 and a ring member 108. The spool body 141 is comprised of a body portion (the fishing line winding drum portion 104a, the skirt portion 104b, and the front flange portion 104c) and an annular protrusion 104d. The annular protrusion 104d is integrally formed on the front side of the body portion, for example, on the front side of the front flange portion 104c. The annular protrusion 104d is plastically deformable. The ring member 108 is disposed on the outer circumferential portion of the annular protrusion 104d. The ring member 108 is held between the deformed part 104k (the plastically deformed portion) of the annular protrusion 104d and the front flange portion 104c by plastically deforming the annular protrusion 104d according to a pressing force.

In the spool 104 of the second embodiment, like in the first embodiment, the fastening member 109 does not need to make contact with the ring member 108. Therefore, a closed space is not formed according to the fastening member 109, the ring member 108, and the spool body 141. As a result, a foreign substance such as seawater or the like is not likely to be retained, and corrosion of the spool body 141 can be suppressed. Namely, in this spool 104, the durability of the spool can be enhanced.

Also, here the fastening member 109 is used as the lid member. Therefore, the fastening member 109 does not need to press the ring member 108. Accordingly, the fastening member 109 does not receive a reactive force from the ring member 108. As a result, even if the fastening member 109 is formed with a resin or the like, it is possible to prevent the deformation of the fastening member 109. Namely, in the spool 104 of the second embodiment, decreasing the weight of the spool and enhancing the durability of the spool can be achieved concurrently.

(2) In the spool 104 of the second embodiment, the spool body 141 (the front flange portion 104c) has a concave portion 104f. The concave portion 104f is formed on the outer circumferential portion of the spool body (the front flange portion 104c). The ring member 108 has a convex portion 108a that engages with the concave portion 104f. By engaging the convex portion 108a with the concave portion 104f, the rotation of the ring member 108 in relation to the spool body 141 is regulated. Accordingly, the rotation of the ring member 108 and the fixation of the ring member 108 in relation to the spool body 141 can be realized concurrently just by deforming the annular protrusion 104d of the spool body 141.

(3) Like the spinning reel 100 in the first embodiment, the spinning reel in the second embodiment is comprised of a reel body, a handle 101, a rotor 103, and a spool 104. In this spinning reel 200, the spool 1 is the spool 104 according to the second embodiment. Accordingly, this spinning reel 200 can enhance the durability or the spool.

An embodiment of the present invention was described above. However, the present invention is not limited to the embodiment described above, and various changes are possible in a scope of not deviating from the essence of the invention. In particular, the many embodiments and modifications described in the specification can be optionally combined as needed.

(A) In the first embodiment, an example was described of a case wherein the rotation of the ring member 8 in relation to the spool body 41 is regulated by forming two concave portions 8a to the ring member 8. However, the number of concave portions 8a is optional. Generally, the rotation of the ring member 8 in relation to the spool body 41 can be regulated if at least one concave portion 8a is formed on the ring member 8.

(B) In the first embodiment, an example was described of a case wherein one portion of the annular protrusion 4d that is adjacent to the concave portion 8a and one portion of the annular protrusion 4d that is not adjacent to the concave portion 8a are deformed. However, it is possible to deform only one portion of the annular protrusion 4d that is adjacent to the concave portion 8a. Even in this case, fixing the ring member 8 to the spool body 41 and regulating the rotation of the ring member 8 in relation to the spool body 41 can be realized concurrently.

(C) In the first embodiment and the second embodiment, an example was described of a case wherein fastening member 9, 109 is used. However, the present invention is applicable even in a spinning reel 100, 200 that does not use a fastening member 9, 109.

(D) In the first embodiment and the second embodiment, an example was described of a case wherein a coupling portion 40 is used. In addition to this, it is possible to form the fishing line winding drum portion 4a, 104a such that the coupling portion 40 and the fishing line winding drum portion 4a, 104a are integrally formed. For example, it is possible to integrally form the cylindrical portion (corresponding to the coupling portion 40) that extends forward from the fishing line winding drum portion 4a to be integral to the fishing line winding drum portion 4a, 104a. In this case, a male threaded portion (corresponding to the front portion of the male threaded portion 40b in the first embodiment) is formed on the outer circumferential portion of this cylindrical portion. A similar configuration to the first embodiment and the second embodiment can be obtained by screwing the second female threaded portion 19b of the fastening member 9 to this male threaded portion. Namely, even in this configuration, the same effects as those in the first embodiment and the second embodiment can be obtained.

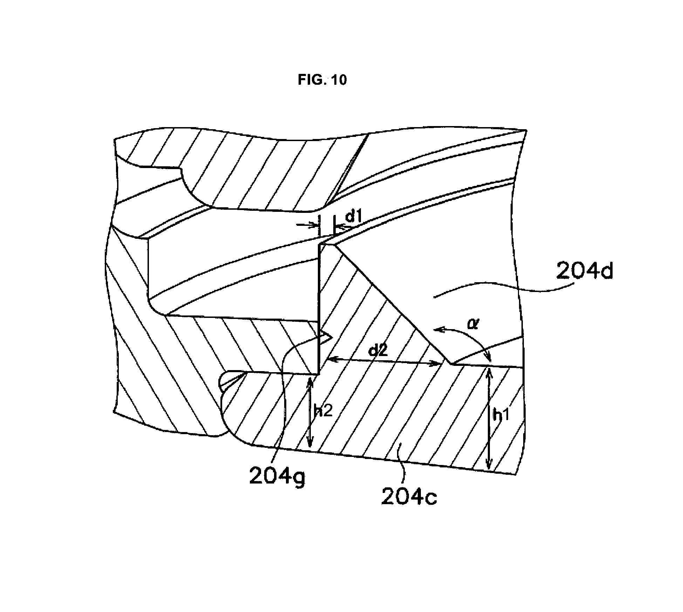

(E) The annular protrusions 4d and 104d described in the first embodiment and the second embodiment can be configured as follows. As illustrated in FIG. 10, it is possible to form a V-shaped groove portion 204g on the outer circumferential portion of the annular protrusion 204d (an example of the protruding portion) at a position forwardly spaced apart from the front flange portion 204c by a prescribed amount. By forming a V-shaped groove portion 204g on the outer circumferential portion of the annular protrusion 204d as described above, it is possible to plastically deform the annular protrusion 204d on the outer circumference side easily with this groove portion 204g as the reference point.

(F) The annular protrusions 4d and 104d described in the first embodiment and the second embodiment can be configured as follows. As illustrated in FIG. 10, it is possible to form the annular protrusions 4d and 104d such that the angle α formed by the inner circumferential portion of the annular protrusions 4d and 104d and the front portion of the front flange portions 4c and 104c is an obtuse angle. In other words, the annular protrusion 4d and 104d can be formed such that the thickness d1 in the radial direction at the extreme end portion of the annular protrusion 4d and 104d is made thinner than the thickness d2 in the radial direction at the base end portion of the annular protrusion. Accordingly, the extreme end portions of the annular protrusions 4d and 104d can easily be plastically deformed.

(G) The front flange portions 4c and 104c described in the first embodiment and the second embodiment can be configured as follows. The front flange portions 4c and 104c can be formed such that the thickness h1 at the section on the radially inward side of the front flange portions 4c and 104c is made thicker than the thickness h2 in the section on the radially outward side of the front flange portions 4c and 104c with the annular protrusions 4d and 104d as reference. Accordingly, a deformation, for example, an out-of-plane deformation in the longitudinal direction, of the section on the radially inward side of the front flange portions 4c and 104c can be prevented when a pressing force is applied to the annular protrusions 4d and 104d.

A wide range of applications of the present invention is possible for a spool for a spinning reel and for a spinning reel.

## Claims

1. A spinning reel spool (4, 104) delivering fishing line forward, the spinning reel spool (4, 104) comprising: a ring member (8, 108) for guiding fishing line forward and a spool body (41, 141) having a body portion, **characterized in that** the spool body has a protruding portion (4d, 104d, 204d) integrally formed on a front side of the body portion, the protruding portion (4d, 104d, 204d) protruding from the body portion in an axial direction of the spool body (41, 141), the ring member (8, 108) being disposed on an outer circumferential surface of the protruding portion (4d, 104d, 204d), the protruding portion (4d, 104d, 204d) comprising a plastically deformable part (4k, 104k), and the ring member (8, 108) being held between the body portion and the plastically deformable part (4k, 104k) of the protruding portion (4d, 104d, 204d) by deforming the plastically deformable part (4k, 104k).

2. The spinning reel spool (4, 104) according to claim 1,
**characterized in that**
one of the ring member (8, 108) and the spool body (41, 141) has a concave portion (8a, 104f), the other of the ring member (8, 108) and the spool body (41, 141) has an engaging portion (108a, 4k) that engages the concave portion (8a, 104f) to limit rotation of the ring member (8, 108) relative to the spool body (41, 141).

3. The spinning reel spool (4) according to claim 2,
**characterized in that**
the ring member (8) includes an inner circumferential portion (81d) having the concave portion (8a), and the engaging portion is a part of the plastically deformable part (4k) of the protruding portion (4d) to limit rotation of the ring member (8) relative to the spool body (41).

4. The spinning reel spool (4, 104) according to claim 3,
**characterized in that**
the inner circumferential portion is a ring member protruding portion (81d), wherein the thickness of the ring member protruding portion (81d) in the axial direction is less than the protruding height of the protruding portion (4d, 104d, 204d) of the spool body (41, 141) in the axial direction.

5. The spinning reel spool (104) according to claim 2,
**characterized in that**
the spool body includes the concave portion (104f), and the engaging portion (108a) is a projection of the ring member (108) that engages the concave portion (104f).

6. The spinning reel spool (4, 104) according to any of the preceding claims, **characterized in that**
the outer circumferential surface of the protruding portion (204d) has a groove (204g) that is located at a position forwardly spaced from the body portion by a prescribed amount.

7. The spinning reel spool (4, 104) according to any of the preceding claims,
**characterized in that**
the protruding portion (204d) has an inner circumferential surface that is obtusely angled (α) with respect to a front surface of the body portion that extends radially inward toward a center axis (X) of the spinning reel spool (4, 104).

8. The spinning reel spool (4, 104) according to any of the preceding claims,
**characterized in that**
the body portion has a first section extending radially inward toward a center axis (X) of the spinning reel spool (4, 104) from the protruding portion (204d), and a second section extending radially outward away from the center axis (X) of the spinning reel spool (4, 104) from the protruding portion (4d, 104d), the first section having a first thickness (h1) as measured in the axial direction, the second section having a second thickness (h2) as measured in the axial direction, the first thickness (h1) being greater than the second thickness (h2).

9. The spinning reel spool (4, 104) according to any of the preceding claims,
**characterized in that**
the ring member (8, 108) is fixed to the spool body by the plastically deformable part (4k, 104k), which is only partially disposed along the protruding portion (4d, 104d).

10. The spinning reel spool (4, 104) according to any of the preceding claims,
**characterized in that**
the protruding portion (4d, 104d, 204d) is an annular member extending around a center axis (X) of the spinning reel spool (4, 104).

11. The spinning reel spool (4, 104) according to any of the preceding claims,
**characterized in that**
the protruding portion (104d) includes two curved sections that are annularly arranged around a center axis (X) of the spinning reel spool (4, 104) and each of the two curved sections including the plastically deformable part (1 04k).

12. A spinning reel (100, 200) including the spinning reel spool (4, 104) according to any of the preceding claims, and further comprising: a reel body (2); a handle (1, 101) rotatably mounted to the reel body (2); and a rotor (3, 103) operatively coupled between the handle (1, 101) and the spinning reel spool (4, 104) to wind fishing line on the spinning reel spool (4, 104).

## Patentansprüche

1. Angelrollenspule (4, 104), die eine Angelschnur nach vorne ausgibt, wobei die Angelrollenspule (4, 104) aufweist: ein Ringelement (8, 108), um die Angelschnur nach vorne zu führen, und einen Spulenkörper (41, 141), der einen Körperabschnitt aufweist, **dadurch gekennzeichnet, dass** der Spulenkörper einen hervorstehenden Abschnitt (4d, 104d, 204d) aufweist, der auf einer Frontseite des Körperabschnittes integral ausgebildet ist, wobei der hervorstehende Abschnitt (4d, 104d, 204d) von dem Körperabschnitt in axialer Richtung des Spulenkörpers (41, 141) hervorsteht, das Ringelement (8, 108) auf einer Außenumfangsfläche des hervorstehenden Abschnittes (4d, 104d, 204d) angeordnet ist, der hervorstehende Abschnitt (4d, 104d, 204d) einen plastisch verformbaren Teil (4k, 104k) aufweist, und das Ringelement (8, 108) zwischen dem Körperabschnitt und dem plastisch verformbaren Teil (4k, 104k) des hervorstehenden Abschnittes (4d, 104d, 204d) durch Verformen des plastisch verformbaren Teils (4k, 104k) gehalten wird.

2. Angelrollenspule (4, 104) nach Anspruch 1,
**dadurch gekennzeichnet, dass**
eines der folgenden, und zwar von dem Ringelement (8, 108) und dem Spulenkörper (41, 141), einen konkaven Abschnitt (8a, 104f) aufweist, und das jeweils andere der folgenden, und zwar von dem Ringelement (8, 108) und dem Spulenkörper (41, 141), einen Eingreifabschnitt (108a, 4k) aufweist, der mit dem konkaven Abschnitt (8a, 104f) in Eingriff kommt, um eine Rotation des Ringelementes (8, 108) bezüglich des Spulenkörpers (41, 141) zu begrenzen.

3. Angelrollenspule (4) nach Anspruch 2,
**dadurch gekennzeichnet, dass**
das Ringelement (8) einen Innenumfangsabschnitt (81d) beinhaltet, der den konkaven Abschnitt (8a) aufweist, und der Eingreifabschnitt ein Teil des plastisch verformbaren Teils (4k) des hervorstehenden Abschnitts (4d) ist, um eine Rotation des Ringelementes (8) bezüglich des Spulenkörpers (41) zu begrenzen.

4. Angelrollenspule (4, 104) nach Anspruch 3,
**dadurch gekennzeichnet, dass**
der Innenumfangsabschnitt ein Ringelement-Vorsprungsabschnitt (81d) ist, wobei die Dicke des Ringelement-Vorsprungsabschnitts (81d) in axialer Richtung geringer als die vorspringende Höhe des hervorstehenden Abschnittes (4d, 104d, 204d) des Spulenkörpers (41, 141) in axialer Richtung ist.

5. Angelrollenspule (104) nach Anspruch 2,
**dadurch gekennzeichnet, dass**
der Spulenkörper den konkaven Abschnitt (104f) beinhaltet, und der Eingreifabschnitt (108a) ein Vorsprung des Ringelementes (108) ist, der mit dem konkaven Abschnitt (104f) in Eingriff kommt.

6. Angelrollenspule (4, 104) nach einem der vorhergehenden Ansprüche,
**dadurch gekennzeichnet, dass**
die Außenumfangsfläche des hervorstehenden Abschnittes (204d) eine Nut (204g) aufweist, die sich an einer Position befindet, welche vom Körperabschnitt um ein vorgeschriebenes Ausmaß nach vorne beabstandet angeordnet ist.

7. Angelrollenspule (4, 104) nach einem der vorhergehenden Ansprüche,
**dadurch gekennzeichnet, dass**
der hervorstehende Abschnitt (204d) eine Innenumfangsfläche aufweist, die in einem stumpfen Winkel (α) bezüglich einer Frontfläche des Körperabschnittes angeordnet ist, die sich radial nach innen hin zu einer Mittelachse (X) der Angelrollenspule (4, 104) erstreckt.

8. Angelrollenspule (4, 104) nach einem der vorhergehenden Ansprüche,
**dadurch gekennzeichnet, dass**
der Körperabschnitt einen ersten Querschnitt, der sich radial nach innen hin zu einer Mittelachse (X) der Angelrollenspule (4, 104) von dem hervorstehenden Abschnitt (204d) erstreckt, und einen zweiten Querschnitt aufweist, der sich radial nach außen weg von der Mittelachse (X) der Angelrollenspule (4, 104) von dem hervorstehenden Abschnitt (4d, 104d) erstreckt, wobei der erste Querschnitt eine erste Dicke (h1) gemessen in axialer Richtung aufweist und der zweite Querschnitt eine zweite Dicke (h2) gemessen in axialer Richtung aufweist, wobei die erste Dicke (h1) größer als die zweite Dicke (h2) ist.

9. Angelrollenspule (4, 104) nach einem der vorhergehenden Ansprüche,
**dadurch gekennzeichnet, dass**
das Ringelement (8, 108) am Spulenkörper durch den plastisch verformbaren Teil (4k, 104k) befestigt ist, der lediglich teilweise entlang dem hervorstehenden Abschnitt (4d, 104d) angeordnet ist.

10. Angelrollenspule (4, 104) nach einem der vorhergehenden Ansprüche,
**dadurch gekennzeichnet, dass**
der hervorstehende Abschnitt (4d, 104d, 204d) ein Ringelement ist, das sich um eine Mittelachse (X) der Angelrollenspule (4, 104) herum erstreckt.

11. Angelrollenspule (4, 10) nach einem der vorhergehenden Ansprüche,
**dadurch gekennzeichnet, dass**
der hervorstehende Abschnitt (104d) zwei gekrümmte Querschnitte aufweist, die in ringartiger Weise um die Mittelachse (X) der Angelrollenspule (4, 104) herum angeordnet sind und jeder der zwei gekrümmten Querschnitte den plastisch verformbaren Teil (104k) beinhaltet.

12. Angelrolle (100, 200), welche die Angelrollenspule (4, 104) nach einem der vorhergehenden Ansprüche beinhaltet, und welche weiter aufweist: einen Rollenkörper (2); einen Griff (1, 101), der am Rollenkörper (2) drehbar montiert ist; und einen Rotor (3, 103), der zwischen dem Griff (1, 101) und der Angelrollenspule (4, 104) funktionsmäßig verbunden ist, um eine Angelschnur auf die Angelrollenspule (4, 104) aufzuwickeln.

## Revendications

1. Bobine de moulinet de pêche (4, 104) délivrant la ligne de pêche vers l'avant, la bobine de moulinet de pêche (4, 104) comprenant : un élément formant anneau (8, 108) pour guider la ligne de pêche vers l'avant et un corps de bobine (41, 141) ayant une partie de corps, **caractérisée en ce que** le corps de bobine a une partie en saillie (4d, 104d, 204d) formée de manière solidaire sur un côté avant de la partie de corps, la partie en saillie (4d, 104d, 204d) faisant saillie à partir de la partie de corps dans une direction axiale du corps de bobine (41, 141), l'élément formant anneau (8, 108) étant disposé sur une surface circonférentielle externe de la partie en saillie (4d, 104d, 204d), la partie en saillie (4d, 104d, 204d) comprenant une partie plastiquement déformable (4k, 104k) et l'élément formant anneau (8, 108) étant maintenu entre la partie de corps et la partie plastiquement déformable (4k, 104k) de la partie en saillie (4d, 104d, 204d) en déformant la partie plastiquement déformable (4k, 104k).

2. Bobine de moulinet de pêche (4, 104) selon la revendication 1, **caractérisée en ce que** :
l'un parmi l'élément formant anneau (8, 108) et le corps de bobine (41, 141) a une partie concave (8a, 104f), l'autre parmi l'élément formant anneau (8, 108) et le corps de bobine (41, 141) a une partie de mise en prise (108a, 4k) qui met en prise la partie concave (8a, 104f) pour limiter la rotation de l'élément formant anneau (8, 108) par rapport au corps de bobine (41, 141).

3. Bobine de moulinet de pêche (4) selon la revendication 2, **caractérisée en ce que** :
l'élément formant anneau (8) comprend une partie circonférentielle interne (81 d) ayant la partie concave (8a) et la partie de mise en prise est une partie de la partie plastiquement déformable (4k) de la partie en saillie (4b) afin de limiter la rotation de l'élément formant anneau (8) par rapport au corps de bobine (41).

4. Bobine de moulinet de pêche (4, 104) selon la revendication 3, **caractérisée en ce que** :
la partie circonférentielle interne est une partie en saillie (81d) de l'élément formant anneau, dans laquelle l'épaisseur de la partie en saillie (81d) de l'élément formant anneau dans la direction axiale est inférieure à la hauteur en saillie de la partie en saillie (4d, 104d, 204d) du corps de bobine (41, 141) dans la direction axiale.

5. Bobine de moulinet de pêche (104) selon la revendication 2, **caractérisée en ce que** :
le corps de bobine comprend la partie concave (104f), et la partie en saillie (108a) est une saillie de l'élément formant anneau (108) qui met en prise la partie concave (104f).

6. Bobine de moulinet de pêche (4, 104) selon l'une quelconque des revendications précédentes, **caractérisée en ce que** :
la surface circonférentielle externe de la partie en saillie (204d) a une rainure (204g) qui est positionnée dans une position éloignée vers l'avant par rapport à la partie de corps selon une quantité prédéterminée.

7. Bobine de moulinet de pêche (4, 104) selon l'une quelconque des revendications précédentes, **caractérisée en ce que** :
la partie en saillie (204d) a une surface circonférentielle interne qui est coudée en angle obtus (α) par rapport à une surface avant de la partie de corps qui s'étend radialement vers l'intérieur vers un axe central (X) de la bobine de moulinet de pêche (4, 104).

8. Bobine de moulinet de pêche (4, 104) selon l'une quelconque des revendications précédentes, **caractérisée en ce que** :
la partie de corps a une première section s'étendant radialement vers l'intérieur vers un axe central (X) de la bobine de moulinet de pêche (4, 104) à partir de la partie en saillie (204d),
et une seconde section s'étendant radialement vers l'extérieur à distance de l'axe central (X) de la bobine de moulinet de pêche (4, 104) à partir de la partie en saillie (4d, 104d), la première section ayant une première épaisseur (h1), telle que mesurée dans la direction axiale, la seconde section ayant une seconde épaisseur (h2), telle que mesurée dans la direction axiale, la première épaisseur (h1) étant supérieure à la seconde épaisseur (h2).

9. Bobine de moulinet de pêche (4, 104) selon l'une quelconque des revendications précédentes, **caractérisée en ce que** :
l'élément formant anneau (8, 108) est fixé sur le corps de bobine par la partie plastiquement déformable (4k, 104k) qui est disposée de manière uniquement partielle le long de la partie en saillie (4d, 104d).

10. Bobine de moulinet de pêche (4, 104) selon l'une quelconque des revendications précédentes, **caractérisée en ce que** :
la partie en saillie (4d, 104d, 204d) est un élément annulaire s'étendant autour d'un axe central (X) de la bobine de moulinet de pêche (4, 104).

11. Bobine de moulinet de pêche (4, 104) selon l'une quelconque des revendications précédentes, **caractérisée en ce que** :
la partie en saillie (104d) comprend deux sections incurvées qui sont agencées de manière annulaire autour d'un axe central (X) de la bobine de moulinet de pêche (4, 104) et chacune des deux sections incurvées comprenant la partie plastiquement déformable (104k).

12. Moulinet de pêche (100, 200) comprenant la bobine de moulinet de pêche (4, 104) selon l'une quelconque des revendications précédentes, et comprenant en outre : un corps de moulinet (2) ; une poignée (1, 101) montée de manière rotative sur le corps de moulinet (2) ; et un rotor (3, 103) couplé de manière opérationnelle entre la poignée (1, 101) et la bobine de moulinet de pêche (4, 104) pour enrouler la ligne de pêche sur la bobine de moulinet de pêche (4, 104).
